# EUROPÄISCHE PATENTSCHRIFT

(11) **EP 4 622 863 B1**
(45) Veröffentlichungstag und Bekanntmachung des Hinweises auf die Patenterteilung: **21.10.2026**
(21) Anmeldenummer: 23748540.4
(22) Anmeldetag: 01.08.2023
(51) Int. Cl.: B64D 9/00

(54) **FÖRDEREINRICHTUNG**
CONVEYOR
DISPOSITIF DE TRANSPORT

(30) Priorität: 25.11.2022 EP 22209725; 06.02.2023 EP 23155150
(43) Veröffentlichungstag der Anmeldung: 01.10.2025
(73) Patentinhaber: Losch Airport Equipment GmbH, 70629 Stuttgart (DE)
(72) Erfinder: LOSCH, Max, 72820 Sonnenbühl-Genkingen (DE)
(74) Vertreter: Jeck, Jonathan
(86) Internationale Anmeldenummer: PCT/EP2023/071239
(87) Internationale Veröffentlichungsnummer: WO 2024/110078

(56) Entgegenhaltungen:
- DE-A1- 102020 118 478
- GB-A- 1 266 884
- KR-B1- 100 836 773
- US-A1- 2018 251 305
- POWER STOW: "Rollertrack conveyor", 12 August 2020 (2020-08-12), Retrieved from the Internet <URL:https://web.archive.org/web/20200812180209/https://powerstow.com/rollertrack-conveyor/#applicables> [retrieved on 20251113]

## Beschreibung

Die vorliegende Erfindung betrifft eine Fördereinrichtung gemäß dem Oberbegriff des Anspruchs 1.

Eine solche Fördereinrichtung ist für die Beförderung von Ladegut in einem Flugzeughold ausgebildet und weist einen flachen Grundkörper auf, welcher sich entlang der Längsachse der Fördereinrichtung erstreckt. Die Fördereinrichtung weist eine Deckseite bildende Oberfläche des Grundkörpers, entlang welcher Gepäck innerhalb des Flugzeugholds verlagerbar ist und ein erstes und zweites Ende entlang der Längsachse der Fördereinrichtung auf.

Nachfolgend wird der aus dem erweiterten europäischen Recherchebericht bekannte Stand der Technik genannt. Dieser Stand der Technik wurde jedoch amtsseitig hinsichtlich der vorliegenden Erfindung als technologischer Hintergrund, also nicht von übergeordneter Bedeutung, deklariert.

Aus der GB 1 266 884 A ist ein Brett mit einer Anordnung von Kugeln oder Rollen bekannt, welche von einer Oberfläche des Bretts abstehen.

Die US 2018/0251305 A1 lehrt Matte 10 für Ladegut, welche mit aus einer Oberfläche ragenden Rollelementen ausgebildet ist. Über Fixierungsmitte 44 ist die Matte an einer Bodenoberfläche 104 befestigt (Abs. 43).

Die DE 10 2020 118 478 A1 offenbart eine Frachtbrücke für Verkehrsflugzeuge, welche wenigstens am Boden (2) der Passagierkabine (1), senkrecht zur Türöffnung (5) zu befestigende Führungsschiene (11), und ein entlang der wenigstens einen Führungsschiene (11) zwischen einer ersten und zweiten Endposition längsverschiebbares Brückenelement (12) umfasst, wobei die Breite des Brückenelementes (12) kleiner ist als die Breite des freien Türöffnungsquerschnitts (7) der geöffneten Passagiertür (1) und der Abstand zwischen der ersten und der zweiten Endposition größer ist als der Abstand zwischen der Innenseite der Passagiertür (1) am Boden (2) der Passagierkabine (1) im geschlossenen Zustand und dem am weitesten über die Außenhaut (3) des Verkehrsflugzeugs hervorstehenden Punkt der Passagiertür (1) im geöffneten Zustand, so dass die Passagiertür (1) in der ersten Endposition geschlossen werden kann und das Brückenelement (12) im zweiten Zustand die geöffnete Passagiertür (4) mit ihrem freien Ende (14) überragt.

Aus der KR 100836773 B1 geht ein Fördersystem für das Abwerfen von Fracht aus einem Drehflügler hervor.

GB 1 266 884 A betrifft einen Förderer, bestehend aus einer flexiblen Unterlage in Form einer Matte, auf deren Oberseite mehrere drehbare Förderelemente - insbesondere Tragkugel-Einheiten, Rollen oder "Skate"-Räder - angeordnet sind. Die Matte kann aus Gummi oder einem Kunststoffmaterial wie Polyvinylchlorid oder Polyethylen bestehen. Die Förderelemente sind bevorzugt in Reihen oder versetzten Mustern auf der Matte befestigt. Aufgrund ihrer Flexibilität ist die Matte über unebenen Untergrund verlegbar, aufrollbar und leicht transportierbar. Mehrere Matten können nebeneinander angeordnet werden, um größere Flächen abzudecken. Die Konstruktion eignet sich insbesondere für den Einsatz in Laderäumen von Fahrzeugen oder Containern, um das Bewegen von Lasten zu erleichtern. Die Befestigung der Förderelemente erfolgt beispielsweise mittels Schrauben, Nieten oder Bolzen, wobei konstruktive Maßnahmen ein Ausreißen der Verbindung verhindern.

Die vorliegende Erfindung löst die Aufgabe, Ladegut von einem äußeren Förderband, wie es üblicherweise zum Beladen eines Flugzeugs Verwendung findet, mit möglichst geringem Aufwand für das Personal und mit vermindertem Risiko der Verletzung der Flugzeugaußenhaut in das Innere des Flugzeugholds zu befördern.

Das obige Problem wird durch eine Vorrichtung gemäß Anspruch 1 und ein Verfahren gemäß Anspruch 12 gelöst.

Hierfür ist an einem ersten Ende der Fördereinrichtung ein Segment vorgesehen, welches sich gegenüber dem restlichen Fördereinrichtung quer zu dessen Längs achse überstehend erstreckt, wodurch die Fördereinrichtung insgesamt eine T- oder L-Form aufweist.

Man erkennt, dass die Erfindung zumindest dann verwirklicht ist, wenn eine Fördereinrichtung für die Beförderung von Ladegut in einem Flugzeughold vorgesehen ist, aufweisend einen flachen Grundkörper, welcher sich entlang einer Längsachse der Fördereinrichtung erstreckt, eine Deckseite bildende Oberfläche des Grundkörpers, entlang welcher Ladegut (30) innerhalb des Flugzeugholds (40) verlagerbar ist und ein erstes und zweites Ende entlang der Längsachse, dadurch gekennzeichnet, dass das erste Ende ein Segment des Förderbands aufweist, welches sich quer zur Längsachse gegenüber dem restlichen Förderband L- oder T-förmig erstreckt, um/zum/für durch eine seitlich angeordnete Luke aus dem Flugzeughold hinaus zu ragen. Erfindungsgemäß ist das Flugzeug sowie dessen Bestandteile wie Flugzeughold und/oder Flugzeugluke dabei nicht Teil der Erfindung. Die Erfindung umfasst auch nicht zwingend ein Förderband eines außerhalb des Flugzeugs befindlichen Fördermittels von Gepäck von einem Transportfahrzeug zu der erfindungsgemäßen Fördereinrichtung bzw. in das Flugzeug hinein.

Dieser sich quer erstreckende endseitig angeordnete Teil der Fördereinrichtung ermöglicht eine direkte Übergabe von Gepäck von einem außerhalb des Flugzeugs angeordneten Förderband auf die erfindungsgemäße Fördereinrichtung. Hierbei ist das endseitige Segment ausgebildet im betriebsgemäßen Zustand, also wenn dieses in den Flugzeughold ausgelegt, und insbesondere mit den weiteren Segmenten der Fördereinrichtung verbunden ist, aus der Luke des Flugzeugs heraus zu ragen.

Das endseitige Segment kann also den Quersteg der T- oder L-Form bilden.

Hierdurch ist eine nahtlose Übergabe von Gepäck von dem Förderband an die erfindungsgemäße Fördereinrichtung außerhalb des Flugzeugs ermöglicht, wobei ein dem ersten Ladegut in den Flugzeughold nachfolgendes Ladegut das erste Ladegut weiter in den zurückgeholt verlagern/ schieben kann. Es ist nicht erforderliche Gepäck per Hand von dem Förderban in das Innere des Flugzeugs oder auf die Fördereinrichtung zu übertragen. Der Antrieb beziehungsweise die Beförderung von Ladegut mittels des Förderbands kann demnach auch zur Beförderung und Weiterleitung von Ladegut innerhalb des Flugzeugholds, insbesondere durch den Schub von nachfolgendem Ladegut, verwendet werden.

Auf Grund der dadurch möglichen beabstandeten Anordnung des Förderbands gegenüber der Außenhaut des Flugzeugs kann einer Verletzung der Außenhaut des Flugzeugs vorgebeugt werden, da durch die Kombination von erfindungsgemäßer Fördereinrichtung und Förderband es nicht erforderlich ist, das Förderband bis an die Luke oder sogar in das Innere des Flugzeugholds hinein auszurichten.

Somit wirkt sich die vorliegende Erfindung sowohl positiv auf die körperliche Anstrengung von Bodenpersonal als auch auf die technische Integrität des Flugzeugs aus.

Nach einer Weiterbildung der vorliegenden Erfindung kann es vorgesehen sein, dass die Fördereinrichtung entlang ihrer Längsrichtung segmentartig auf ist, wobei die einzelnen Segmente funktionsfähige Einheiten bilden.

Zweckmäßigerweise ist die Fördereinrichtung nur vorübergehend im Inneren des Flugzeugholds auszulegen, nämlich dann, wenn der Flugzeughold be- oder entladen werden soll. Darüberhinausgehend ist kann es vorteilhaft sein, die Fördereinrichtung an dem Förderband oder dem Flugfeld zu lagern, wodurch das Gewicht des Flugzeugs durch die Fördereinrichtung während des Flugs nicht erhöht wird. Bevorzugt bildet die erfindungsgemäße Fördereinrichtung keinen integralen Bestandteil eines Flugzeugs.

Ein segmentartiger Aufbau der Fördereinrichtung ermöglicht einen besonders einfachen Auf- und Abbau. Bevorzugt weisen die Segmente dabei eine Dimensionierung von 50 cm bis 1,5 m in der Länge (entlang der Längsachse) und/oder 50 cm bis 1,20 m in der Breite auf. Besonders bevorzugt kann die Länge zwischen 80 und 100 cm, insbesondere 90 cm betragen. Die Breite kann bevorzugt, zwischen 40 cm und 60 cm, insbesondere 50 cm betragen.

Der Quersteg, welcher die T- beziehungsweise L-Form der Fördereinrichtung ausmachen kann, also das endseitige Segment der Fördereinrichtung, kann eine Breite von vorzugsweise 80 cm bis 2 m quer zur Längsachse aufweisen. Bevorzugt kann der Quersteg, um mindestens 30 cm, gegenüber der Breite der weiteren Segmente der Fördereinrichtung quer zur Längsachse zumindest zu einer Seite überstehen. Das endseitige Segment kann also breiter sein als die weiteren Segmente der Fördereinrichtung vorzugsweise um mindestens 30 cm.

In der Richtung quer dazu, also parallel zur Längsachse, kann das endseitige Segment eine Tiefe/Länge von vorzugsweise 50 cm bis 1,50 m aufweisen. Grundsätzlich kann es zweckmäßig sein, dass die Breite der einzelnen Segmente an die Breite der Luke des Flugzeugholds angepasst sind, insbesondere um den Transport der Segmente in und aus dem Flugzeughold zu vereinfachen.

Nach einer zweckmäßigen Weiterbildung der vorliegenden Erfindung kann es vorgesehen sein, dass die Länge des endseitigen Segments, welche auch als Tiefe bezeichnet wurde, kleiner oder gleich der Breite der Flugzeugluke ist. Dadurch kann gewährleistet werden, dass das endseitige Segment der Fördereinrichtung im betriebsgemäßen Zustand aus der Flugzeugluke herausragen kann.

Nach einer besonders bevorzugten Weiterbildung der vorliegenden Erfindung kann es vorgesehen sein, dass das endseitige Segment mindestens 30 % und/oder mindestens 30 cm gegenüber den weiteren Segmenten der Fördereinrichtung seitlich übersteht. Vorzugsweise steht das endseitige Segment weniger als 50 % gegenüber den weiteren Segmenten der Fördereirichtung seitlich gegenüber.

Nach der vorliegenden Erfindung ist der Begriff einer funktionsfähigen Einheit dahingehend zu verstehen, dass jedes Segment für sich bereits zur Beförderung von Ladegut ausgebildet und bereit sein kann, sobald dieses im Flugzeughold ausgelegt ist, ohne mit weiteren Elementen oder Einheiten verbunden sein zu müssen. Weitere vorbereitende Maßnahmen für das Abrollen/Transprotieren von Ladegut auf dessen Oberfläche müssen grundsätzlich nicht erforderlich sein. Dies ist insbesondere in Abgrenzung zu Fördereinrichtung zu verstehen, welche erst aus Einzelteilen aufgebaut werden müssen, um den Transport von Ladegut zu ermöglichen.

Nach einer Weiterbildung der vorliegenden Erfindung kann es vorgesehen sein, dass die Segmente ihrer Größe nach angepasst sind, durch die die Luke aus dem Flugzeug entfernt wird.

Nach einer besonders zweckmäßigen Weiterbildung der vorliegenden Erfindung kann es vorgesehen sein, dass die einzelnen Segmente eine Mehrzahl von Rollenelementen aufweisen, welche aus der Deckseite herausragen und eine Kontaktfläche für das auf der Fördereinrichtung zu bewegende Ladegut bilden.

Hierbei können die Rollen den eigentlichen Kontakt zum Ladegut bilden. Grundsätzlich kann alternativ oder ergänzend hierzu die erfindungsgemäße Fördereinrichtung auch mit einer friktionsarmen Oberfläche für den Transport von Ladegut darauf bereitgestellt sein.

Nach der vorliegenden Erfindung ist es vorgesehen, dass zwischen dem endseitigen Segment und einem benachbarten weiteren Segment der Fördereinrichtung eine lösbare Verbindung bereitgestellt ist, mittels welcher das endseitige Segment quer zur Längsachse in mehreren Positionen gegenüber dem benachbarten Segment festlegbar ist.

Diese lösbare Verbindung, welche auch als einstellbare Verbindung bezeichnet werden kann, kann es ermöglichen, den Quersteg/die Ausrichtung des endseitigen Segments gegenüber der Längsachse der Fördereinrichtung bedarfsgerecht anzupassen. Da der Flugzeughold von verschiedenen Flugzeugtypen unterschiedliche Breiten aufweisen kann, ermöglicht die lösbare Verbindung eine bedarfsgerechte Anpassung des Querstegs/der Ausrichtung des endseitigen Segments gegenüber der restlichen Fördereinrichtung, wodurch unabhängig vom Flugzeugtyp in zuverlässiger Weise ein Herausragen des endseitigen Segments aus der Flugzeugluke heraus ermöglicht ist. Grundsätzlich kann die Verbindung beispielsweise Haken-Bösen verbinden, durch welche die einzelnen Segmente in einfacher Weise miteinander verbindbar sind. Der internationale Flugverkehr erfordert es, dass standardisierte Breiten bei Flugzeugluken verwendet werden, wodurch nur eine begrenzte Anzahl von Möglichkeiten der Dimensionierung der erfindungsgemäßen Fördereinrichtung erforderlich sind.

Nach einer zweckmäßigen Weiterbildung der vorliegenden Erfindung kann es vorgesehen sein, dass die lösbare Verbindung nach dem Haken-Öse Prinzip aufgebaut ist, wobei an dem innenseitigen Segment mehr Haken oder mehr Ösen vorgesehen sind, als an dem benachbarten Segment, wodurch eine Variabilität der Anordnung des endseitigen Segments an dem benachbarten Segment Quer zur Längsrichtung ermöglich ist.

Nach einer zweckmäßigen Weiterbildung der vorliegenden Erfindung kann es vorgesehen sein, dass das endseitige Segment als ein doppelwandiger Flachkörper ausgebildet ist, welcher einen dazwischenliegenden Hohlkörper aufweist, in welchen ein Teil des Körpers der drehbar gelagerten Kugeln hineinragt und vorzugsweise mit einem Polymerschaum gefüllt ist.

Zweckmäßigerweise kann es vorgesehen sein, dass die Kugeln zumindest teilweise in das Innere des endseitigen Segments hineinragen. Dadurch kann der aus dem endseitigen Segment herausragende Teil der Kugeln eine Kontaktoberfläche für das darauf befindliche oder beförderte Ladegut bilden.

Nach einer besonders bevorzugten Weiterbildung der vorliegenden Erfindung kann es vorgesehen sein, dass das Segment am ersten Ende der Fördereinrichtung, also dem endseitigen Segment/Quersteg, an zumindest einem seitlich überstehenden Ende stirnseitige Rollen aufweist, welche im betriebsgemäß auf dem Boden ausgelegtem Zustand des Segments frei drehbar bereitgestellt sind. Diese Rollen können einen Kontaktbereich für ein Förderband bilden, welches Gepäckstück/Ladegut von außen der Ladeluke/Flugzeugluke zustellt. Die Kontaktrollen ermöglichen es einen nahtlosen Übergang von der erfindungsgemäßen Fördereinrichtung zu dem Förderband zu bilden, wodurch in besonders verlässlicher Weise das Ladegut zwischen den beiden Elementen übergeben werden kann. Dabei kann die freie Drehbarkeit bestehen, bis dem ausgelegten endseitigen Element das Förderband zugestellt ist.

Nach einer besonders zweckmäßigen Weiterbildung der vorliegenden Erfindung kann es vorgesehen sein, dass das endseitige Segment der Fördereinrichtung mit einer friktionserhöhenden Unterseite und die weiteren Segmente mit einer friktionsarmen Unterseite bereitgestellt sind. Hierdurch kann die erfindungsgemäße Fördereinrichtung an ihrem Kopfende, also dem Bereich des endseitigen Segments, welches den Quersteg bilden kann, auf dem Boden eines Flugzeugholds (rutschfest/rutscharm) festgelegt werden, wohingegen die weiteren Segmente der Fördereinrichtung auf dem Boden der Fördereinrichtung beweglich verlagerbar sind. Hierdurch kann die Fördereinrichtung als eine Kopf-Schwanz-Anordnung bereitgestellt werden, bei welcher der Schwanz flexibel innerhalb des Flugzeugholds in seiner Orientierung beziehungsweise Ausrichtung anpassbar/verschiebbar ist.

Besonders zweckmäßiger Weise kann es vorgesehen sein, dass die lösbare Verbindung zwischen den einzelnen Segmenten der Fördereinrichtung mit einem Spiel bereitgestellt ist, welches eine Änderung der Ausrichtung der Segmente zueinander von linear zu bogenförmig auf dem Boden des Flugzeugholds ermöglicht. Dies gilt in besonderer Weise für die voranstehend erwähnte Haken-Ösen-Verbindung, bei welcher eine gegenüber dem zugehörigen Haken vergrößerte Öse ein Spiel in der Verbindung bereitstellt, welches eine leicht abgewinkelte Anordnung von benachbarten Segmenten zueinander ermöglicht. Bei einer Mehrzahl von aneinander angeordneten Segmenten lässt sich hierdurch die Ausrichtung der Fördereinrichtung insgesamt in verschiedenen Geometrien, insbesondere bogenförmig oder linear ausrichten.

Nicht nur, jedoch auch in Kombination mit einem endseitig auf dem Boden des Flugzeugholds ortsfest vorgesehenen ersten (endseitigen) Segment und den gegenüber dem Boden des Flugzeugholds beweglich gelagerten weiteren Segmenten der Fördereinrichtung lässt sich die Fördereinrichtung im Betrieb hinsichtlich ihrer Ausrichtung besonders vorteilhaft anpassen, insbesondere ohne dabei in nachteiliger Weise die Position und/oder Ausrichtung des endseitigen Segments gegenüber der Ladeluke (in bedeutsamer Weise) zu verändern.

Nach der vorliegenden Erfindung wird ein Verfahren zum Beladen eines Flugzeugholds über eine Ladeluke mit Ladegut beansprucht, bei welchem insbesondere mittels der erfindungsgemäßen Fördereinrichtung im Flugzeughold angrenzend zur Ladeluke ein erstes endseitiges Segment einer Fördereinrichtung aus der Ladeluke herausragend und an ein flugzeugseitiges Ende eines Förderbands anschließend oder überlappend ausgelegt wird, weitere Segmente/Abschnitte werden entlang einer Längsachse des Flugzeugs im Hold ausgelegt und mit dem ersten endseitigen Segment und miteinander verbunden, wodurch eine Fördereinrichtung gebildet wird, welche der Länge nach, insbesondere während des Be- oder Entladevorgangs, bis zu der Länge des zugänglichen Flugzeugholds anpassbar ist, Ladegut über das Förderband der Ladeluke des Flugzeugs von außen zugestellt wird, wobei das Ladegut mittels des Förderbands an das endseitige Segment außerhalb des Flugzeugs übertragen/übergeben wird, wobei das Ladegut auf dem/das endseitige/n Segment in das Innere des Flugzeugs weitergeleitet/befördert wird und über die weiteren Segmente/Abschnitte in das Innere des Flugzeugholds weitergeleitet wird.

Bei diesem Verfahren wird die Fördereinrichtung bevorzugt bis an das zugängliche Ende des Flugzeugholds ausgelegt, wodurch Ladegut bis an das innere Ende des Flugzeugholds ohne großen körperlichen Aufwand transportierbar ist. Soweit der Flugzeughold nach und nach befüllt wird, werden bevorzugt einzelne Segmente der Fördereinrichtung entfernt, um die Länge der Fördereinrichtung ausgehend von der Flugzeugluke an einen Befüllungsgrad des Flugzeugholds anzupassen, sodass die Fördereinrichtung vorzugsweise immer bis in einen zugänglichen Endbereich des Flugzeugholds reicht, also der Punkt im Flugzeughold, welcher zu einem bestimmten Ladezustand über die Luke noch erreichbar ist. Beim Entladen des Flugzeugholds hingegen wird mit einer entsprechend gekürzten Fördereinrichtung, welches bis zu dem vordersten Ladeguttücken/Gepäckstücken reicht, begonnen und mit zunehmender Entladung des Flugzeugholds die Fördereinrichtung um weitere Segmente verlängert, um die sich nach und nach bildende Distanz von Ladegut zur Flugzeugluke zu überbrücken.

Hierdurch ist zu jedem Zeitpunkt eine effiziente Übergabe von Fördereinrichtung zu einem Lagerplatz im Flugzeughold ermöglicht.

Die Erfindung wird nachfolgend anhand der beigefügten Zeichnungen näher erläutert. In den Figuren zeigen:
- Figur 1: eine schematische Draufsicht auf eine Ausführungsform der vorliegenden Erfindung in einem ersten Flugzeugtyp einer ersten Breite und
- Figur 2: eine schematische Draufsicht auf eine Ausführungsform der vorliegenden Erfindung in einem zweiten Flugzeugtyp zweiter Breite.

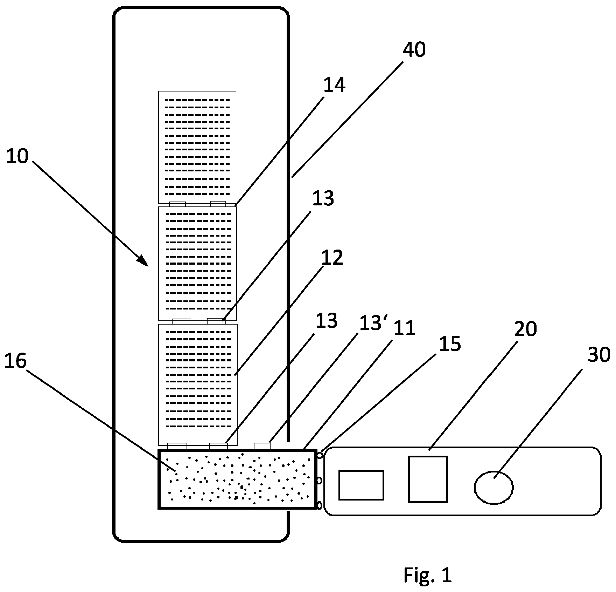

Figur 1 zeigt eine Draufsicht auf eine Ausführungsform der vorliegenden Erfindung 10, bei welcher in einem Flugzeughold 40 einer ersten Breite das endseitige Segment 11 durch eine Flugzeugluke ragend ausgelegt ist. Mit dem endseitigen Segment 11 sind weitere Segmente 12 der Fördereinrichtung 10 über Verbindungsmittel 13 lösbar verbunden. Diese können insbesondere die voranstehend genannte Haken-Ösen Verbindung sein. Bevorzugt ist zwischen den einzelnen Segmenten beziehungsweise in deren jeweiliger Verbindung ein Spalt beziehungsweise ein Spiel 14 bereitgestellt. Dieses Spiel ermöglicht die seitliche Verlagerung der einzelnen Segmente in einem Winkel zueinander, wodurch die Fördereinrichtung 10 insgesamt auch bogenförmig in dem Flugzeughold 14 anordenbar ist. Bevorzugt ermöglich das Spiel eine Anstellung zweier benachbarter Segmente um min 1° bevorzugt 2-5°, besonders bevorzugt bis zu 10° oder mehr.

Bevorzugt ist das endseitige Element 11 durch eine entsprechend ausgestaltete Unterseite gegenüber dem Flugzeughold mit einem Reibwiderstand bereitgestellt. Dabei kann es sich beispielsweise um Friktionserhöhende Beschichtung wie beispielsweis eine Gummierung handeln. Die weiteren Segmente 12 sind bevorzugt gegenüber dem endseitigen Segment 11 mit verringertem Reibwiderstand bereitgestellt, wodurch sich diese leicht, reibarm gegenüber dem Flugzeugholdboden verlagern lassen. Hierdurch lässt sich die Ausrichtung der Fördereinrichtung auch im laufenden Betrieb bedarfsgerecht anpassen, wodurch das dem endseitigen Segment 11 im Flugzeughold gegenüberliegende Ende der Fördereinrichtung quer zur Längsrichtung hin und her bewegen lässt, insbesondere ohne, dass sich dabei das endseitige Segment bei der Flugzeugluke wesentlich in seiner Position und/Orientierung verändert.

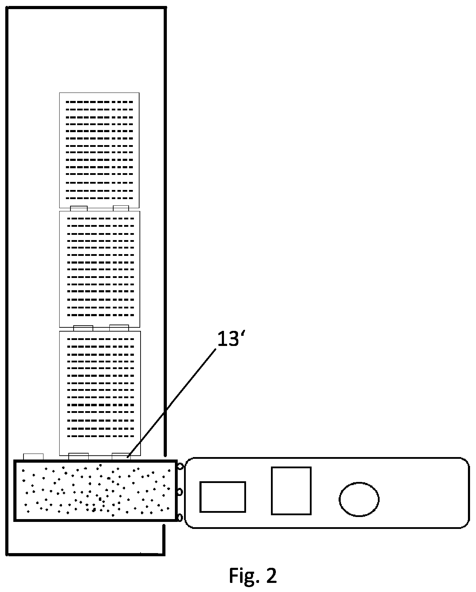

An dem endseitigen Segment können eine oder mehrere zusätzliche Verbindungsmittel 13' für eine Verbindung zu einem benachbarten Segment, insbesondere Haken oder Ösen vorgesehen sein, wodurch die weiteren Segmente 12 an dem endseitigen Segment 11 in verschiedenen relativen Positionen festgelegt werden können. Dies wird insbesondere aus einem Vergleich von Figur 1 mit Figur 2 deutlich.

Zumindest teilweise aus der Oberfläche des endseitigen Segments 11 herausragend können rollbar gelagerte Kugeln 16 angeordnet sein, welche gemeinsam eine abrollende Oberfläche für das darauf zu transportierenden Ladegut 30 bereitstellen können.

An einer seitlichen Stirnseite des endseitig angeordneten Segments 11, quer zur Längsachse der Fördereinrichtung, können Rollelemente 15 bereitgestellt sein, welche frei drehend ausgebildet sein können. Dies ermöglicht einen direkten Kontakt mit einem sich stetig bewegenden Förderband 20, wodurch die erfindungsgemäße Vorrichtung an das Förderband 20 auf Stoß angeordnet werden kann.

Hierdurch ist eine besonders zuverlässige Übergabe von Ladegut 30 von dem Förderband 2020, auf die erfindungsgemäße Vorrichtung 10 (oder anders herum) ermöglicht. Dem ersten Ladegut 30 nachfolgendes Ladegut 30 kann dabei bereits auf das endseitige Segment 11 übergebenes Ladegut 30 weiter in das Innere des Flugzeugs verschieben.

Je nach Füllstand des Flugzeugholds werden eine entsprechende Anzahl von Segmenten 12 der erfindungsgemäßen Fördereinrichtung 10 ausgelegt. Je weiter der Flugzeughold mit Ladegut gefüllt ist, desto weiter wird die Fördereinrichtung 10 um Segmente 12 gekürzt, wodurch die Fördereinrichtung 10 jeweils bis zum aktuellen Endbereich des Flugzeugholds ragt.

Figur 2 zeigt die Ausführungsform nach Figur 1 jedoch in einem Flugzeughold befindlich, welcher schmaler ist als der nach Figur 1. Für eine bedarfsgerechte Positionierung der Segmente 12 gegenüber dem endseitigen Segment 11 sind diese an dem endseitigen Segment 11 über andere Verbindungsmittel 13 und 13' festgelegt, wodurch die relative Anordnung von Fördereinrichtung zu Flugzeughold (mit vorzugsweise einem festlegbaren Abstand zur Innenwand des Flugzeugholds) sowie die Länge des seitlich überstehenden Teils des endseitigen Segments bedarfsgerecht angepasst ist.

## Patentansprüche

1. Fördereinrichtung (10) für die Beförderung von Ladegut (30) im Hold eines Flugzeugs, das eine seitlich angeordnete Ladeluke hat, die Fördereinrichtung aufweisend
- einem flachen Grundkörper, welcher sich entlang einer Längsachse der Fördereinrichtung (10) erstreckt
- einer Deckseite bildenden Oberfläche des Grundkörpers, entlang welcher Ladegut (30) innerhalb des Flugzeugholds (40) verlagerbar ist und
- einem ersten und zweiten Ende entlang der Längsachse,
wobei das erste Ende ein Segment (11) der Fördereinrichtung aufweist, welches sich quer zur Längsachse gegenüber der restlichen Fördereinrichtung L- oder T-förmig erstreckt und aus der Luke des Flugzeugs herausragend anordenbar ist,
**dadurch gekennzeichnet,**
**dass** zwischen dem endseitigen Segment (11) und einem benachbarten weiteren Segment (12) der Fördereinrichtung eine lösbare Verbindung (13, 13') bereitgestellt ist, mittels welcher das endseitige Segment (11) quer zur Längsachse in verschiedenen Positionen gegenüber dem benachbarten Segment (12) festlegbar ist.

2. Fördereinrichtung nach Anspruch 1
**dadurch gekennzeichnet,**
**dass** die Fördereinrichtung (10) in Längsrichtung segmentartig aufgebaut ist, wobei die einzelnen Segmente (11, 12) in sich funktionsfähige Einheiten bilden.

3. Fördereinrichtung nach einem der Ansprüche 1 oder 2
**dadurch gekennzeichnet,**
**dass** die Segmente (11, 12) ihrer Größe nach angepasst sind, durch die Luke aus dem Flugzeug entfernt werden zu können.

4. Fördereinrichtung nach einem der Ansprüche 1 bis 3
**dadurch gekennzeichnet,dass** die einzelnen Segmente (11, 12) eine Mehrzahl von Rollelementen aufweisen, welche aus der Deckseite herausragen und eine Kontaktoberfläche für das auf und gegenüber der Fördereinrichtung (10) zu bewegenden Ladegut (30) bilden.

5. Fördereinrichtung nach Anspruch 4
**dadurch gekennzeichnet,**
**dass** das endseitige Segment (11) am ersten Ende der Fördereinrichtung (10) als Rollelemente eine Anordnung von rollbar gelagerten Kugeln aufweist, welche bevorzugt teilweise aus der Deckseite des Segments (11) herausragen und/oder die weiteren Segmente (12) als Rollelemente drehbar gelagerte Rollkörper, insbesondere Zylinder, aufweisen, deren Drehachsen quer zur Längsrichtung festgelegt sind.

6. Fördereinrichtung nach einem der Ansprüche 1 bis 5
**dadurch gekennzeichnet,**
**dass** das endseitige Segment (11) mindestens 30 % oder mindestens 30 cm gegenüber den weiteren Segmenten (12) der Fördereinrichtung (10) seitlich übersteht.

7. Fördereinrichtung nach Anspruch 1
**dadurch gekennzeichnet,**
**dass** die lösbare Verbindung nach dem Haken-Öse Prinzip aufgebaut ist, wobei an dem endseitigen Segment (11) mehr Haken oder Ösen vorgesehen sind als an dem benachbarten Segment (12), wodurch eine Variabilität der Anordnung des endseitigen Segments (11) des ersten Endes an dem benachbarten Segment (12) quer zur Längsrichtung ermöglich ist.

8. Fördereinrichtung nach Anspruch 1
**dadurch gekennzeichnet,**
**dass** das endseitige Segment (11) als ein doppelwandiger Flachkörper ausgebildet ist, welcher einen dazwischen liegenden Hohlkörper aufweist, in welchem ein Teil des Körpers der drehbar gelagerten Kugeln hineinragt und vorzugsweise mit einem Polymerschaum gefüllt ist.

9. Fördereinrichtung nach einem der Ansprüche 1 bis 8
**dadurch gekennzeichnet,**
**dass** das Segment (11) am ersten Ende der Fördereinrichtung an zumindest einem seitlich überstehenden Ende stirnseitige Rollen (15) aufweist, welche im ausgelegten Zustand des Segments frei drehbar bereitgestellt sind.

10. Fördereinrichtung nach einem der Ansprüche 1 bis 9
**dadurch gekennzeichnet,**
**dass** das Segment (11) am ersten Ende der Fördereinrichtung mit einer friktionserhöhenden Unterseite und die weiteren Segmente (12) mit einer friktionsarmen/ärmeren Unterseite bereitgestellt sind.

11. Fördereinrichtung nach einem der Ansprüche 1 bis 10
**dadurch gekennzeichnet**,
die lösbare Verbindung (13) zwischen den Segmenten (11, 12) mit einem Spiel bereitgestellt ist, welche eine Änderung der Ausrichtung der Segmente (11, 12) zueinander von linear zu bogenförmig ermöglicht.

12. Verfahren zum Beladen eines Flugzeugholds (40) über eine Ladeluke mit Ladegut (30) mit einer Fördereinrichtung nach einem der Ansprüche 1 bis 11 bei welchem im Flugzeughold (40) angrenzend zur Ladeluke ein erstes endseitiges Segment (11) der Fördereinrichtung aus der Ladeluke herausragend und an ein flugzeugseitiges Ende eines Förderbands (20) anschließend oder überlappend ausgelegt wird, weitere Segmente/Abschnitte (12) entlang einer Längsachse des Flugzeugs im Hold ausgelegt und mit dem ersten endseitigen Segment (11) und miteinander verbunden werden, wodurch eine Fördereinrichtung (10) gebildet wird, welche der Länge nach bis zu der Länge des jeweils zugänglichen Flugzeugholds (40) anpassbar ist,
Ladegut (30) über das Förderband (20) der Ladeluke des Flugzeugs von außen zugestellt wird, wobei das Ladegut (30) mittels des Förderbands (20) an das endseitige Segment (11) außerhalb des Flugzeugs übertragen wird, wobei das Ladegut auf dem endseitigen Segment (11) in das Innere des Flugzeugs weitergeleitet/befördert wird und über die weiteren Segmente/Abschnitte (12) in das Innere des Flugzeugholds (40) weitergeleitet wird, und das endseitige Segment (11) durch die lösbare Verbindung (13,13') quer zur Längsachse in verschiedenen Positionen gegenüber dem benachbarten Segment (12) festgelegt wird.

## Claims

1. A conveying device (10) for transporting cargo (30) in a hold of an aircraft having a laterally arranged loading hatch, the conveying device comprising
• a flat base body which extends along a longitudinal axis of the conveying device (10),
• a surface of the base body forming a top side, along which cargo (30) is displaceable within the aircraft hold (40), and
• a first and a second end along the longitudinal axis,
wherein the first end has a segment (11) of the conveying device which extends transversely to the longitudinal axis in an L-shaped or T-shaped manner relative to the remaining conveying device and is arrangeable so as to protrude from the hatch of the aircraft,
**characterised in**
**that** a releasable connection (13, 13') is provided between the end segment (11) and an adjacent further segment (12) of the conveying device, by means of which the end segment (11) is fixable transversely to the longitudinal axis in various positions relative to the adjacent segment (12).

2. The conveying device according to claim 1,
**characterised in**
**that** the conveying device (10) is constructed in a segmented manner in the longitudinal direction, wherein the individual segments (11, 12) form functionally capable units in themselves.

3. The conveying device according to one of claims 1 or 2,
**characterised in**
**that** the segments (11, 12) are adapted in their size so as to be able to be removed from the aircraft through the hatch.

4. The conveying device according to one of claims 1 to 3,
**characterised in that** the individual segments (11, 12) have a plurality of rolling elements which protrude from the top side and form a contact surface for the cargo (30) to be moved on and relative to the conveying device (10).

5. The conveying device according to claim 4,
**characterised in**
**that** the end segment (11) at the first end of the conveying device (10) has as rolling elements an arrangement of rollably mounted balls which preferably partially protrude from the top side of the segment (11) and/or the further segments (12) have as rolling elements rotatably mounted rolling bodies, in particular cylinders, the axes of rotation of which are fixed transversely to the longitudinal direction.

6. The conveying device according to one of claims 1 to 5,
**characterised in**
**that** the end segment (11) protrudes laterally by at least 30% or at least 30 cm relative to the further segments (12) of the conveying device (10).

7. The conveying device according to claim 1,
**characterised in**
**that** the releasable connection is constructed according to the hook-and-eye principle, wherein more hooks or eyes are provided on the end segment (11) than on the adjacent segment (12), whereby a variability of the arrangement of the end segment (11) of the first end on the adjacent segment (12) transversely to the longitudinal direction is enabled.

8. The conveying device according to claim 1,
**characterised in**
**that** the end segment (11) is formed as a double-walled flat body which has a hollow body lying therebetween, into which a part of the body of the rotatably mounted balls protrudes and which is preferably filled with a polymer foam.

9. The conveying device according to one of claims 1 to 8,
**characterised in**
**that** the segment (11) at the first end of the conveying device has end-face rollers (15) at at least one laterally protruding end, which are provided so as to be freely rotatable in the deployed state of the segment.

10. The conveying device according to one of claims 1 to 9,
**characterised in**
**that** the segment (11) at the first end of the conveying device is provided with a friction-increasing underside and the further segments (12) are provided with a low-friction/lower-friction underside.

11. The conveying device according to one of claims 1 to 10,
**characterised in**
**that** the releasable connection (13) between the segments (11, 12) is provided with a play which enables a change in the alignment of the segments (11, 12) relative to one another from linear to arcuate.

12. A method for loading an aircraft hold (40) with cargo (30) via a loading hatch using a conveying device according to one of claims 1 to 11, in which a first end segment (11) of the conveying device is deployed in the aircraft hold (40) adjacent to the loading hatch so as to protrude from the loading hatch and so as to adjoin or overlap an aircraft-side end of a conveyor belt (20), further segments/sections (12) are deployed along a longitudinal axis of the aircraft in the hold and are connected to the first end segment (11) and to one another, whereby a conveying device (10) is formed which is adaptable in length up to the length of the respectively accessible aircraft hold (40), cargo (30) is delivered from outside to the loading hatch of the aircraft via the conveyor belt (20), wherein the cargo (30) is transferred by means of the conveyor belt (20) to the end segment (11) outside the aircraft, wherein the cargo is forward-ed/conveyed on the end segment (11) into the interior of the aircraft and is forwarded via the further segments/sections (12) into the interior of the aircraft hold (40), and the end
segment (11) is fixed by the releasable connection (13, 13') transversely to the longitudinal axis in various positions relative to the adjacent segment (12).

## Revendications

1. Dispositif de convoyage (10) pour le transport de marchandises (30) dans une soute d'un avion qui présente une trappe de chargement disposée latéralement, le dispositif de convoyage comprenant
• un corps de base plat qui s'étend le long d'un axe longitudinal du dispositif de convoyage (10),
• une surface du corps de base formant un côté supérieur, le long de laquelle des marchandises (30) peuvent être déplacées à l'intérieur de la soute d'avion (40), et
• une première et une deuxième extrémité le long de l'axe longitudinal,
la première extrémité présentant un segment (11) du dispositif de convoyage qui s'étend transversalement à l'axe longitudinal en forme de L ou de T par rapport au reste du dispositif de convoyage et qui peut être disposé de manière à faire saillie hors de la trappe de l'avion,
**caractérisé en ce**
**qu'**une liaison amovible (13, 13') est prévue entre le segment d'extrémité (11) et un autre segment adjacent (12) du dispositif de convoyage, au moyen de laquelle le segment d'extrémité (11) peut être fixé transversalement à l'axe longitudinal dans différentes positions par rapport au segment adjacent (12).

2. Dispositif de convoyage selon la revendication 1,
**caractérisé en ce**
**que** le dispositif de convoyage (10) est construit de manière segmentée dans la direction longitudinale, les segments individuels (11, 12) formant des unités fonctionnelles en elles-mêmes.

3. Dispositif de convoyage selon l'une des revendications 1 ou 2,
**caractérisé en ce**
**que** les segments (11, 12) sont adaptés en termes de taille pour pouvoir être retirés de l'avion par la trappe.

4. Dispositif de convoyage selon l'une des revendications 1 à 3,
**caractérisé en ce que** les segments individuels (11, 12) présentent une pluralité d'éléments roulants qui font saillie du côté supérieur et forment une surface de contact pour les marchandises (30) à déplacer sur et par rapport au dispositif de convoyage (10).

5. Dispositif de convoyage selon la revendication 4,
**caractérisé en ce**
**que** le segment d'extrémité (11) à la première extrémité du dispositif de convoyage (10) présente comme éléments roulants un agencement de billes montées de manière rotative, lesquelles font de préférence partiellement saillie du côté supérieur du segment (11) et/ou les autres segments (12) présentent comme éléments roulants des corps roulants montés de manière rotative, en particulier des cylindres, dont les axes de rotation sont fixés transversalement à la direction longitudinale.

6. Dispositif de convoyage selon l'une des revendications 1 à 5,
**caractérisé en ce**
**que** le segment d'extrémité (11) dépasse latéralement d'au moins 30 % ou d'-au moins 30 cm par rapport aux autres segments (12) du dispositif de convoyage (10).

7. Dispositif de convoyage selon la revendication 1,
**caractérisé en ce**
**que** la liaison amovible est construite selon le principe crochet-œillet, un plus grand nombre de crochets ou d'œillets étant prévus sur le segment d'extrémité (11) que sur le segment adjacent (12), ce qui permet une variabilité de l'-agencement du segment d'extrémité (11) de la première extrémité sur le segment adjacent (12) transversalement à la direction longitudinale.

8. Dispositif de convoyage selon la revendication 1,
**caractérisé en ce**
**que** le segment d'extrémité (11) est réalisé sous forme d'un corps plat à double paroi qui présente un corps creux situé entre les deux parois, dans lequel une partie du corps des billes montées de manière rotative fait saillie et qui est de préférence rempli d'une mousse polymère.

9. Dispositif de convoyage selon l'une des revendications 1 à 8,
**caractérisé en ce**
**que** le segment (11) à la première extrémité du dispositif de convoyage présente sur au moins une extrémité dépassant latéralement des rouleaux frontaux (15) qui sont prévus librement rotatifs à l'état déployé du segment.

10. Dispositif de convoyage selon l'une des revendications 1 à 9,
**caractérisé en ce**
**que** le segment (11) à la première extrémité du dispositif de convoyage est pourvu d'une face inférieure à friction augmentée et les autres segments (12) sont pourvus d'une face inférieure à faible friction/à friction réduite.

11. Dispositif de convoyage selon l'une des revendications 1 à 10,
**caractérisé en ce**
**que** la liaison amovible (13) entre les segments (11, 12) est prévue avec un jeu qui permet une modification de l'orientation des segments (11, 12) l'un par rapport à l'autre de linéaire à arquée.

12. Procédé de chargement d'une soute d'avion (40) par une trappe de chargement avec des marchandises (30) au moyen d'un dispositif de convoyage selon l'une des revendications 1 à 11, dans lequel un premier segment d'extrémité (11) du dispositif de convoyage est déployé dans la soute d'avion (40) de manière adjacente à la trappe de chargement, faisant saillie hors de la trappe de chargement et se raccordant à ou chevauchant une extrémité côté avion d'un convoyeur à bande (20), d'autres segments/sections (12) sont déployés le long d'un axe longitudinal de l'avion dans la soute et sont reliés au premier segment d'extrémité (11) et entre eux, formant ainsi un dispositif de convoyage (10) qui est adaptable en longueur jusqu'à la longueur de la soute d'avion (40) respectivement accessible, des marchandises (30) sont acheminées de l'extérieur vers la trappe de chargement de l'avion par le convoyeur à bande (20), les marchandises (30) étant transférées au moyen du convoyeur à bande (20) vers le segment d'extrémité (11) à l'extérieur de l'avion, les marchandises étant acheminées/transportées sur le segment d'extrémité (11) vers l'intérieur de l'avion et acheminées vers l'intérieur de la soute d'avion (40) par les autres segments/sections (12), et le segment d'extrémité
(11) est fixé par la liaison amovible (13, 13') transversalement à l'axe longitudinal dans différentes positions par rapport au segment adjacent (12).
